# EUROPEAN PATENT APPLICATION

(11) **EP 4 436 215 A1**
(43) Date of publication of application: **25.09.2024**
(21) Application number: 23163914.7
(22) Date of filing: 24.03.2023
(51) Int. Cl.: H04S 7/00, H04M 3/56

(54) **REPRESENTATION OF AUDIO SOURCES DURING A CALL**

(71) Applicant: Nokia Technologies Oy, 02610 Espoo (FI)
(72) Inventor: Vilermo, Miikka Tapani, 37200 Siuro (FI); Lehtiniemi, Arto Juhani, 33880 Lempäälä (FI); Salmimaa, Marja Pauliina, 33610 Tampere (FI)
(74) Representative: Nokia EPO representatives

(57) **Abstract**

Disclosed is a method comprising: rendering a call, for a user, wherein the call comprises a first sector and a second sector, wherein the first sector comprises a first participant in the call and at least one spatial audio source associated with the first participant, and the second sector comprises a second participant and at least one spatial audio source associated with the second participant, detecting an activity of the user, and as a response to the activity of the user, providing an audible change in the rendering of the call by modifying at least one of the first and the second sector.

## Description

### Field

The following exemplary embodiments relate to rendering audio during a call, which may be a call comprising immersive audio.

### Background

When in a call, the participants may experience the call as a more realistic in terms of mimicking a face-to-face conversation in case immersive audio experience is provided. Using sound sources that are spatial sound sources and rendering those in addition to the voices of the participants, the call may be rendered in a manner that is experienced, by the participants, as a more realistic one.

### Brief Description

The scope of protection sought for various embodiments of the invention is set out by the independent claims. The exemplary embodiments and features, if any, described in this specification that do not fall under the scope of the independent claims are to be interpreted as examples useful for understanding various embodiments of the invention.

According to a first aspect there is provided an apparatus comprising means for performing: rendering a call, for a user, wherein the call comprises a first sector and a second sector, wherein the first sector comprises a first participant in the call and at least one spatial audio source associated with the first participant, and the second sector comprises a second participant and at least one spatial audio source associated with the second participant, detecting an activity of the user, and as a response to the activity of the user, providing an audible change in the rendering of the call by modifying at least one of the first and the second sector.

In some example embodiments according to the first aspect, the means comprises at least one processor, and at least one memory storing instructions that, when executed by the at least one processor, to cause the performance of the apparatus.

According to a second aspect there is provided an apparatus comprising at least one processor, and at least one memory storing instructions that, when executed by the at least one processor, to cause the apparatus at least to: render a call, for a user, wherein the call comprises a first sector and a second sector, wherein the first sector comprises a first participant in the call and at least one spatial audio source associated with the first participant, and the second sector comprises a second participant and at least one spatial audio source associated with the second participant, detect an activity of the user, and as a response to the activity of the user, provide an audible change in the rendering of the call by modifying at least one of the first and the second sector.

According to a third aspect there is provided a method comprising: rendering a call, for a user, wherein the call comprises a first sector and a second sector, wherein the first sector comprises a first participant in the call and at least one spatial audio source associated with the first participant, and the second sector comprises a second participant and at least one spatial audio source associated with the second participant, detecting an activity of the user, and as a response to the activity of the user, providing an audible change in the rendering of the call by modifying at least one of the first and the second sector.

In some example embodiment according to the third aspect the method is a computer implemented method.

According to a fourth aspect there is provided a computer program comprising instructions which, when executed by an apparatus, cause the apparatus to perform at least the following: render a call, for a user, wherein the call comprises a first sector and a second sector, wherein the first sector comprises a first participant in the call and at least one spatial audio source associated with the first participant, and the second sector comprises a second participant and at least one spatial audio source associated with the second participant, detect an activity of the user, and as a response to the activity of the user, provide an audible change in the rendering of the call by modifying at least one of the first and the second sector.

According to a fifth aspect there is provided a computer program comprising instructions stored thereon for performing at least the following: rendering a call, for a user, wherein the call comprises a first sector and a second sector, wherein the first sector comprises a first participant in the call and at least one spatial audio source associated with the first participant, and the second sector comprises a second participant and at least one spatial audio source associated with the second participant, detecting an activity of the user, and as a response to the activity of the user, providing an audible change in the rendering of the call by modifying at least one of the first and the second sector.

According to a sixth aspect there is provided a non-transitory computer readable medium comprising program instructions that, when executed by an apparatus, cause the apparatus to perform at least the following: render a call, for a user, wherein the call comprises a first sector and a second sector, wherein the first sector comprises a first participant in the call and at least one spatial audio source associated with the first participant, and the second sector comprises a second participant and at least one spatial audio source associated with the second participant, detect an activity of the user, and as a response to the activity of the user, provide an audible change in the rendering of the call by modifying at least one of the first and the second sector.

According to a seventh aspect there is provided a non-transitory computer readable medium comprising program instructions stored thereon for performing at least the following: rendering a call, for a user, wherein the call comprises a first sector and a second sector, wherein the first sector comprises a first participant in the call and at least one spatial audio source associated with the first participant, and the second sector comprises a second participant and at least one spatial audio source associated with the second participant, detecting an activity of the user, and as a response to the activity of the user, providing an audible change in the rendering of the call by modifying at least one of the first and the second sector.

According to an eighth aspect there is provided a computer readable medium comprising program instructions that, when executed by an apparatus, cause the apparatus to perform at least the following: render a call, for a user, wherein the call comprises a first sector and a second sector, wherein the first sector comprises a first participant in the call and at least one spatial audio source associated with the first participant, and the second sector comprises a second participant and at least one spatial audio source associated with the second participant, detect an activity of the user, and as a response to the activity of the user, provide an audible change in the rendering of the call by modifying at least one of the first and the second sector.

According to a ninth aspect there is provided a computer readable medium comprising program instructions stored thereon for performing at least the following: rendering a call, for a user, wherein the call comprises a first sector and a second sector, wherein the first sector comprises a first participant in the call and at least one spatial audio source associated with the first participant, and the second sector comprises a second participant and at least one spatial audio source associated with the second participant, detecting an activity of the user, and as a response to the activity of the user, providing an audible change in the rendering of the call by modifying at least one of the first and the second sector.

### List of Drawings

In the following, the invention will be described in greater detail with reference to the embodiments and the accompanying drawings, in which
FIG. 1A illustrates an example embodiment rendering spatial audio sources in a call.
FIG. 1B illustrates an example embodiment of a further development of the call illustrated in the example embodiment of FIG. 1A.
FIG. 1C illustrates an example of a further development of the example embodiment illustrated in FIG. 1B.
FIG. 2A illustrates an example embodiment of a call.
FIG. 2B illustrates an example embodiment of a development of the example embodiment illustrated in FIG. 2A.
FIG. 3A illustrates an example embodiment of a call.
FIG. 3B illustrates an example embodiment of further developing the example embodiment of FIG. 3A.
FIG. 3C illustrates an example embodiment of further development of the example embodiment illustrated in FIG. 3B.
FIG. 4 illustrates a flow chart according to an example embodiment.
FIG. 5 illustrates an example embodiment of an apparatus.

### Description of Embodiments

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device. The above-described embodiments of the circuitry may also be considered as embodiments that provide means for carrying out the embodiments of the methods or processes described in this document.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, microcontrollers, microprocessors, other electronic units designed to perform the functions described herein, or a combination thereof. For firmware or software, the implementation can be carried out through modules of at least one chipset (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via any suitable means. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

For an enhanced user experience, a call, that may be a voice call or a video call, spatial audio sources may be rendered, in addition to the participants and their voice, to provide an immersive user experience during the call, which may also be referred to as a live call. For example, there may be one or more sound sources around a user, who is a participant in the call, that are then rendered as spatial audio sources to the other participants in the call. Thus, the user is one participant in the call and the call has also one or more other participants. Yet, the user is the participant from whose point of view the call is herein described. The user therefore is a person in the call for whom the voice of the other participants is rendered. As the sound sources are spatial audio sources, they may be rendered such that the other one or more participants in the call can perceive the audio sources as having a certain location from which they are rendered, and, optionally, the other participants may explore an audio scene in which the spatial audio sources are comprised. Thus, in an immersive call, the user and the one or more other participants that are participating in the call, can experience far-end audio scene of one or more other participants as full 360-degree spatial audio where audio sources surround their respective participant. If immersive user experience is provided during the call, the call may be for example according to a standard such as 3GPP IVAS.

Yet, in an immersive call, the user should still be able to differentiate between sound sources, that may be spatial audio sources, that are rendered in the call and sound source(s) that originate from the surrounding environment of the user. For example, an ambulance in the real-world environment surrounding the user should not be mistakenly understood as an ambulance that is merely rendered as part of the ongoing immersive call, in which case the user might just ignore it. Also, when there are more than one participant, in addition to the user, in the immersive call, in other words the call is a multiparty telco, there may be more than one overlapping 360-degree spatial audio sources. The spatial audio sources may also be understood as far-end 360-degree sound sources.

In some example embodiments, the far-end 360-degree spatial audio sources may be collapsed to mono sounds that are panned to a direction. Although this helps to differentiate between the spatial audio sources in the call and the audio sources in the surrounding environment, it may not allow modification of far-end sound sources spatially based on 3 degrees-of-freedom (dof) or 6dof movement of the user, who is receiving the rendering, which may lead to reduction of the immersive aspect of the call. Also, it may not allow to distinguish between normal mono participants and spatial participants in the call because they would sound the same to the user receiving the rendering.

Therefore, it is desirable to have a method for rendering the spatial audio sources comprised in an immersive call such that a user, who is perceiving the rendering, is able to differentiate between spatial audio sources comprised in the call and audio sources in the environment of the user. For example, the movement of the user may be detected and then used as a basis for determining the manner in which the audio sources, that may be spatial audio sources, in the call are rendered. For example, there may be an audible change in the rendering that is based on an activity of the user, which in this example is 3dof or 6dof movement of the user perceiving the rendering. The device that is used for the rendering may be any suitable device and it is also to be noted that the device may be connected to other devices used for the rendering as well, for example to external loudspeakers of head-worn devices such as earbuds. The device may be a computing device that may be for example a mobile computing device.

For example, to allow the user to perceive the rendering such that the user is able to differentiate between the spatial audio sources comprised in the call and the audio sources in the environment of the user, the rendering of the spatial audio sources comprised in the call may be placed to a sector that is narrow enough such that it allows differentiating from the audio sources in the environment around the user. The sector may be understood as part of the 360 degree field around a user and the sector may be specific to a participant in the call such that the spatial audio sources associated with the participant are comprised in the sector. Thereby, if the sector is modified, it may comprise modifying the spatial audio sources comprised in the sector as well. Modifying the spatial audio sources may result in an audible change that is rendered to the user. The sector may be virtual in a sense that the sector may not be visible to the user. Also, the sector may be defined during the rendering by the device used for the rendering or by any other suitable means. This manner of rendering may be logical in the sense that the talker, who is another participant in the call, and around whom the sector for rendering the spatial audio sources is defined, remains in a fixed position.

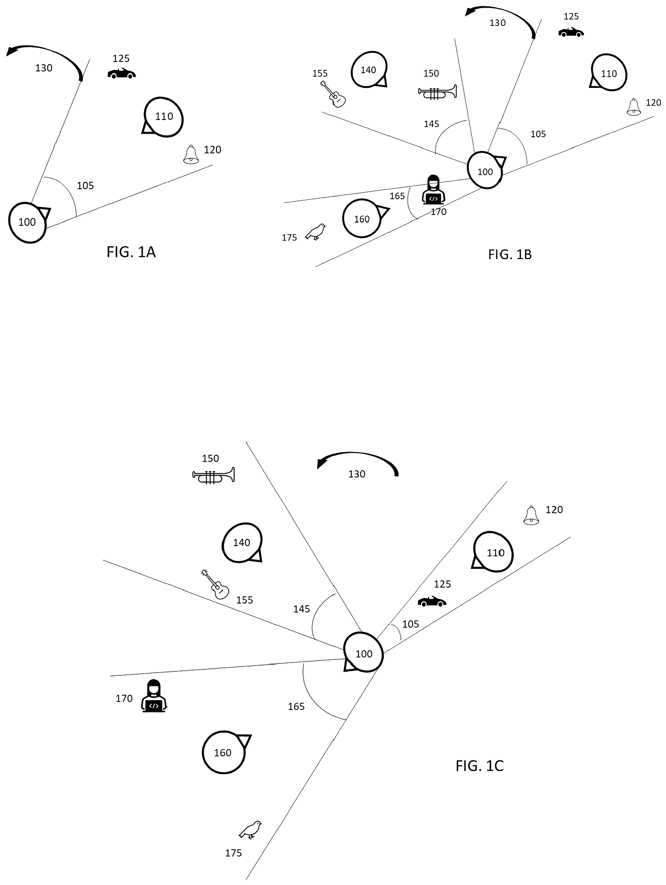

FIG. 1A illustrates an example embodiment of rendering spatial audio sources in a call that is an immersive call. In this example embodiment, a user 100 is in the call with another participant 110, who may be understood as a first participant. This example embodiment illustrates the rendering perceived by the user 100. The user 100 perceives the participant 110 and spatial audio sources associated with the participant 110 within the sector 105 that is a field of perception allocated to rendering the participant 110 and spatial audio sources associated with the participant 110. The sector 105 may be understood as a first sector. In this example embodiment, the spatial audio sources associated with the participant 110 are the spatial audio source 125, that is a car, and the spatial audio source 120, that is a bell. The spatial audio source 125 that is to the right of the participant 110, is rendered according to the positive rotation direction 130, and the spatial audio source 120 that is to the left of the participant 110, is rendered according to a negative rotation direction that is a rotation direction opposite to the positive rotation direction 130. The voice of the participant 110 is kept at a fixed location, in other words, the voice of the participant 110 is an audio source that remains at its location. In this example embodiment, the full width of the sector 105 may be utilized for rendering as the user 100 faces the participant 110, in other words, the participant 110 is in front of the user 100.

FIG. 1B illustrates an example embodiment of a further development of the call illustrated in the example embodiment of FIG. 1A. In the example embodiment of FIG. 1B, there are two more participants in the call, the participant 140, who may be understood as a second participant, and the participant 160, who may be understood as a third participant. The user 100 perceives the participant 140 and spatial audio sources 150 and 155 that are associated with the participant 140, within the sector 145, that is a field of perception of the user 100, and which may be understood as a second sector. The participant 160 is perceived by the user 100 within the sector 165, which may be understood as a third sector. The spatial audio sources 170 and 175 that are associated with the participant 160, are also perceived by the user 100 within the sector 165, that is another field of perception of the user 100. As the user 100 is facing the participant 110, the sector 105 may be wider than the sectors 145 and 165 which are sectors outside a field of view of the user 100. The spatial audio sources 150 and 155 as well as the spatial audio sources 170 and 175 are rotated to be closer to their associated user such that they are rendered within their respective sectors.

FIG. 1C is an example of a further development of the example embodiment illustrated in FIG. 1B. In this example embodiment, the user 100 has turned his head such that his field of view is now towards the participant 160. Consequently, the sector 165 is spread such that it is the widest sector and the sector 105 is made narrower and the spatial audio sources 125 and 120 are moved such that they are rendered still within the narrower sector 105. Additionally, the spatial audio sources 120 and 125 may be attenuated to emphasize the effect of the narrowing. Other audio processing methods may also be used such as low-pass filtering, adding echo etc.

The sector that is the widest and which is aligned with the field of view of the user 100 may be understood as a primary sector. The other sectors may be understood as secondary sectors. Modifying the sectors may be understood as changing the width of the sector and/or modifying rendering of one or more spatial audio sources comprised in the sector. Thus, modifying one or more sector may cause an audible change to be rendered to the user 100.

Thus, the example embodiments of FIG. 1A, 1B and 1C illustrate an example of a method for rendering spatial audio sources during a live call, which is an immersive call, for a user 100 such that the rendering has an audible change that is dependent on an activity of the user 100, which is this example is the movement of the user 100. In this example method the movement is a 3dof movement comprising turn of the head of the user 100. The rendering of the spatial audio sources within sectors that are, or have become, secondary sectors due to the movement of the user 100, are squeezed to a narrow sector so that they do not disturb the user 100 listening to real-world sounds around him, and the rendering is logical in the sense that the participant within the secondary sectors remains in a fixed position. Spatial sound sectors may be squeezed more behind the participants than in front of them to make the sectors behind the user 100 less distracting for example. Thus, the audible change may comprise modifying the sectors 105, 145 and 165 in response to the activity of the user 100. Modifying a sector such as sectors 105, 145 and 165, may comprise one or more of the following: modifying how wide or narrow the sector is, where the spatial audio sources are located within the sectors, and how the spatial audio sources comprised in the sector are rendered.

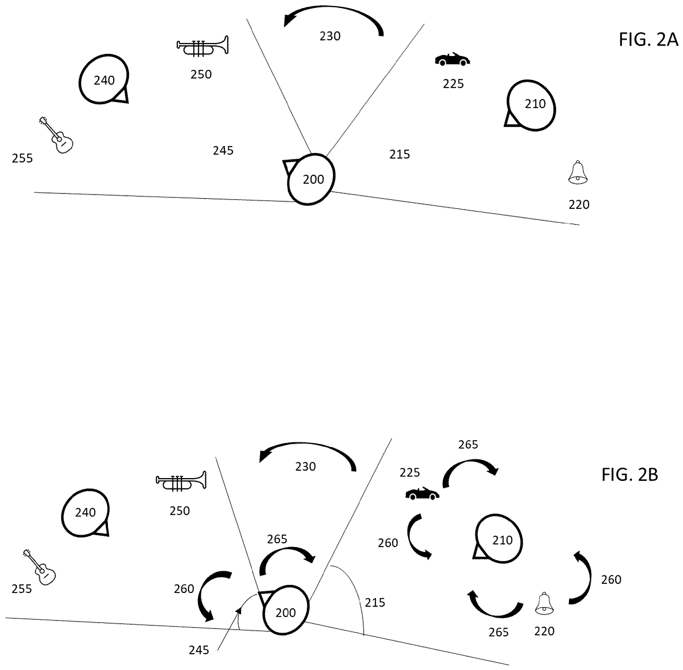

FIG. 2A illustrates another example embodiment of a call that is an immersive call. In this example embodiment, a user 200 is in the call with two other participants, the participant 210, who may be understood as a first participant, and participant 240, who may be understood as a second participant. The call is rendered to the user 200 such that the spatial audio sources 225 and 220 are associated with the participant 210 and are rendered within a sector 215, which may be understood as a first sector. The spatial audio sources 250 and 255 are associated with the participant 240, and are rendered within a sector 245, which may be understood as a second sector. The positive rotation direction is direction 230. In this example embodiment, the spatial audio sources 220, 225, 250 and 255 are rendered such that the spatial audio source 225 that is to the right of the participant 210 and the spatial audio source 255 that is to the right of the participant 240 are rendered towards the positive rotation direction 230. The spatial audio source 220, that is to the left of the participant 210, and the spatial audio source 250, that is to the left of the participant 240 are rendered towards a negative rotation direction that is opposite rotation direction to the positive rotation direction 230. The voice of the participant 210 and the voice of the participant 240 are rendered such that they originate from a fixed location and direction that in this example embodiment is a world-locked direction.

FIG. 2B illustrates an example embodiment of a development of the example embodiment illustrated in FIG. 2A. The spatial audio sources 225 and 220 associated with the participant 210 are such that their directions can be modified. The spatial audio sources 250 and 255 are spatial audio sources whose direction cannot be modified. Alternatively, the spatial audio sources 250 and 255 may be mono audio sources. As the user 200 moves his head, by rotating along the direction 260 or 265, and/or the movement is translation movement, the spatial audio sources 225 and 220 associated with the participant 210 are moved corresponding to an activity of the participant 210, that is the movement of the participant 210. Thus, the sector 215 is modified as a response to an activity of the user, which in this example embodiment is the movement of the head of the user 200. As such, the sound scene around the participant 210 may be explored by movements of the user 200. The sound scene around the participant 240 on the other hand does not change. As the rotation movement of the head of the user 200 changes the sound scene of the participant 210 but not that of the participant 240, the audible change indicates that the sound scene around the participant 210 is explorable, for example a 6 dof sound scene.

In some example embodiments the speed of rotation of the spatial audio sources 220 and 225, that are part of the sound scene associated with the participant 210, can be faster than the speed of movement of the head of the user 200. This movement may be for example 2-5 times faster. This makes it easier for the user 200 to notice that a sound scene associated with a participant in the call may be explored by movements of the user 200.

FIG. 2A and 2B illustrate an example embodiment of a method for rendering spatial audio sources during a live call for a user 200, where the rendering has an audible change that is dependent on activity of the user 200, which in this example embodiment comprises the movement of the user 200. The user 200 head movement changes audio directions inside the sectors to audibly demonstrate which sectors have sound sources that can be explored with movement. Thus, the activity of the user 200 causes an audible change by modifying the sectors such that the rendering of audio is such that it causes the audible change that can be perceived by the user 200.

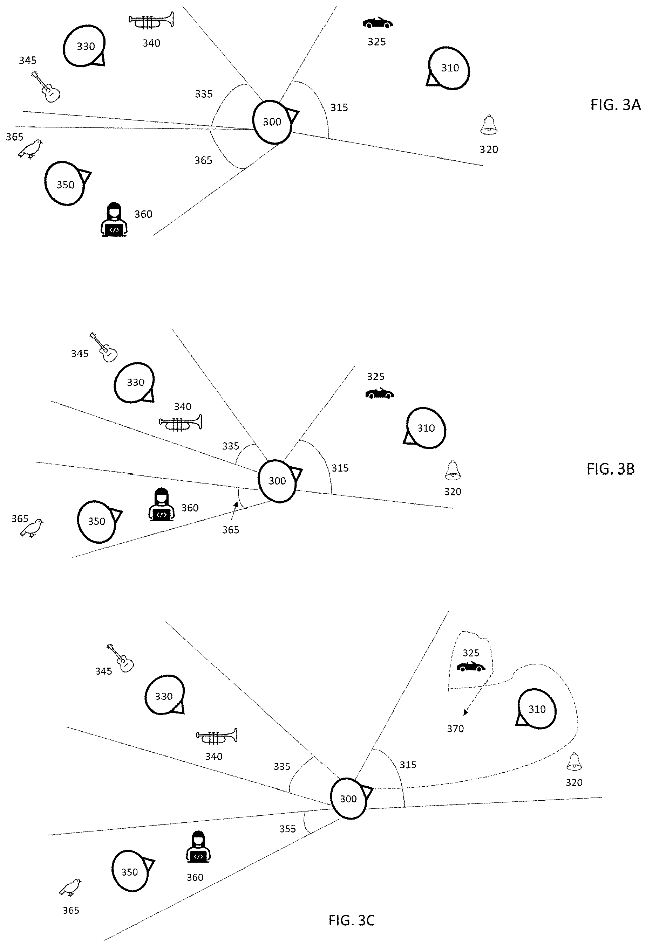

FIG. 3A illustrates another example embodiment of a call, that is an immersive call. In this example embodiment, there is a user 300 for whom the call is rendered. There are also three other participants in this call. Those are the participant 310, 330 and 350. The participant 310 is associated with spatial audio sources 320 and 325, which are rendered in a sector 315 associated with the participant 310. The sectors 315 may be understood as a first sector. The participant 330 is associated with spatial audio sources 340 and 345, which are rendered in a sector 335, that is a second sectors, associated with the participant 330. The participant 350 is associated with spatial audio sources 360 and 365, which are rendered in a sector 355, that is a third sector, associated with the participant 350. In this example embodiment, the user 300 selects the participant 310 as a user for interacting with. The selection may be performed by the user 300 providing user input that may be given in any suitable manner, for example, by looking at the participant 310 for a pre-determined time period. The participant 310 is then selected for interaction with the user 300, in other words, the user 300 is locked on the participant 310.

FIG. 3B illustrates an example embodiment of further developing the example embodiment of FIG. 3A. In this example embodiment, as the user 300 is locked on the participant 310, the sectors 335 and 355 associated with the other participants 330 and 350 are made narrower in response to the locking. Additionally, the sector 315 associated with the participant 310 may be expanded. Optionally, also other indications such as volume may be used to indicate the locking.

FIG. 3C illustrates an example embodiment of further development of the example embodiment illustrated in FIG. 3B. After the locking, the user 300 may move 370 to explore the sound scene associated with the participant 310. The sectors 335 and 355 are modified such that spatial audio sources 340, 345, 360 and 365 are rotated around the participant they are associated with such that they are, within their sector, in line with the participant they are associated with when perceived from the viewpoint of the user 300. Alternatively, or additionally, they may be modified by moving them closer to the participant they are associated with thereby allowing the respective sector to be narrower. Further, additionally or alternatively, they may be moved such that they are brought closer to the user 300. Optionally, they may also be turned to mono audio sources. The spatial audio sources 320 and 325 may optionally be moved from a sector mode to a full mode to allow 360 degrees immersive user experience to the user 300.

The example embodiments of FIG. 3A, 3B and 3C illustrate an example embodiment of a method for rendering spatial audio sources during a live call for a user 300, where the rendering has an audible change that is dependent on the 6dof movement of the user 300. The rendering may be modified by moving the spatial audio sources such that they are rotated to be in line with the participant they are associated with when perceived from the perspective of the user 300. This may comprise moving the spatial audio sources to a narrow sector that does not disturb the user 300 listening to real-world sounds around him. Sound directions inside the sector change when user 300 moves in 6dof so that the user 300 can explore the sounds in the sector. The spatial audio sources may optionally be moved closer to their respective participant. Additionally, or alternatively, they may optionally be moved closer to the user 300.

The example embodiments described above may also be combined into a system in which a user can test which participant is associated with spatial audio sources that can be explored in 6dof. For example, the user can select one of those participants by performing an activity, such as moving or looking towards the direction of the participant. The system may then indicate the selection, in response to the user performing the activity, by narrowing the audio sectors of the other participants. When the selection is confirmed, the user may move around to explore the sound scene of that participant.

In the example embodiments described above, spatial audio sources are moved to a narrower sector. In other words, the spatial audio sources are collapsed. The spatial audio sources can be collapsed to a sector using multiple methods. As one example, from a stereo (L and R channels) signal, three separate signals can be created and those can be rendered to originate from inside the sector. L channel from right edge of sector, R channel from left edge of sector and a mid-channel (L+R)/2 from the middle of the sector. As another example, from 5.1 signal (L, R, C, LFE, Ls, Rs), the signals may be rendered to originate in a following manner: L channel from right edge of sector, R channel from left edge of sector and a C from the middle of the sector. In a further example, from 5.1 signal (L, R, C, LFE, Ls, Rs) the rendering may be performed such that the signals are rendered to originate in a following manner: (L+Ls)/2 from right edge of sector, (R+Rs)/2 channel from left edge of sector and a C from the middle of the sector. In another example, from a spherical harmonics signal (W, X, Y, Z), the signals are rendered to originate from in the following manner: Y is played from right edge of the sector, (W minus Y i.e. a signal zoomed towards negative y-axis) is played from left edge of the sector and X is played from the middle of the sector. In a further example, from a spherical harmonics signal: a beamformed mono signal towards left direction (typically positive y-axis direction) is played from right edge of the sector, a beamformed mono signal towards right direction (typically negative y-axis direction) is played from left edge of the sector and a beamformed towards front (positive x-axis) signal or omni (W) signal is played from the middle of the sector. In another example, from a microphone array signal: a beamformed mono signal towards left direction is played from right edge of the sector, a beamformed mono signal towards right direction is played from left edge of the sector and a beamformed towards front mono signal is played from the middle of the sector. In another example, from a parametric audio signal that is represented by one or more audio channels and at least directional metadata: all parts of the audio signal where direction in the metadata is 45°-135° is played from right edge of the sector, parts where direction is -45°-45° or 135°-225° is played from the middle of the sector, and all the parts where direction is -135°- -45° is played from the left edge of the sector. In a further example, from an object + ambience type of signal (for example one of 3GPP IVAS formats) object is typically speech and ambience either all or the rest of sounds. Speech is played from the middle of the sector and ambience from the sides spatially or as two mono signals that are the same signals. Also, any suitable methods of sound source separation such as beamforming or blind sound source separation methods can be used to separate audio into speech and ambience. Speech may be played from the middle of the sector and ambience from the edges.

In the example embodiments described above, the sounds are rendered to originate from three directions inside a sector, but this can optionally be extended to arbitrarily many directions or continuous ranges. The audio sources may be transmitted using encoding, such as MPEG AAC or 3GPP IVAS.

If an activity performed by a user comprises movement of the head of the user, the head rotations may be detected in any suitable manner, for example, with inertial measurement units (IMU), cameras, Time-Of-Flight cameras, or other sensors and systems. Sound source may be rendered to a user from different directions using any suitable method. For headphones, for example Head Related Transfer Function (HRTF) -based methods may be used. For loudspeaker playback, panning such as Vector Based Amplitude Panning (VBAP) may be used.

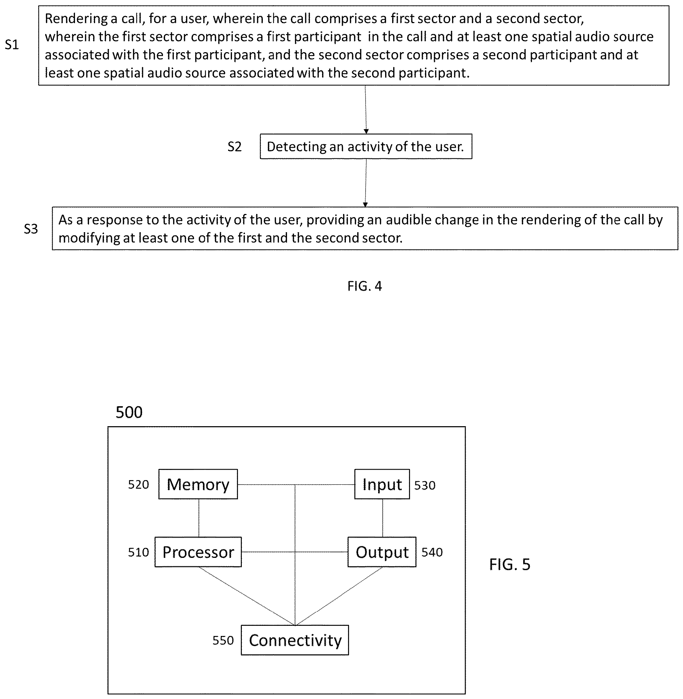

FIG. 4 illustrates a flow chart according to an example embodiment. The flow chart may illustrate for example a method according to an example embodiment. First, in block S1, the flow chart comprises rendering a call, for a user, wherein the call comprises a first sector and a second sector, wherein the first sector comprises a first participant in the call and at least one spatial audio source associated with the first participant, and the second sector comprises a second participant and at least one spatial audio source associated with the second participant. Then, in block S2, the flow chart comprises detecting an activity of the user. Finally, in block S3, the flow chart comprises providing, as a response to the activity of the user, an audible change in the rendering of the call by modifying at least one of the first and the second sector.

FIG. 5 illustrates an example embodiment of an apparatus 500, which may be or may be comprised in a terminal device. The apparatus 500 comprises a processor 510. The processor 510 interprets computer program instructions and process data. The processor 510 may comprise one or more programmable processors. The processor 510 may comprise programmable hardware with embedded firmware and may, alternatively or additionally, comprise one or more application specific integrated circuits, ASICs.

The processor 510 is coupled to a memory 520. The processor is configured to read and write data to and from the memory 520. The memory 520 may comprise one or more memory units. The memory units may be volatile or non-volatile. It is to be noted that in some example embodiments there may be one or more units of non-volatile memory and one or more units of volatile memory or, alternatively, one or more units of non-volatile memory, or, alternatively, one or more units of volatile memory. Volatile memory may be for example RAM, DRAM or SDRAM. Non-volatile memory may be for example ROM, PROM, EEPROM, flash memory, optical storage or magnetic storage. In general, memories may be referred to as non-transitory computer readable media. The memory 520 stores computer readable instructions that are executed by the processor 510. For example, non-volatile memory stores the computer readable instructions and the processor 510 executes the instructions using volatile memory for temporary storage of data and/or instructions.

The computer readable instructions may have been pre-stored to the memory 520 or, alternatively or additionally, they may be received, by the apparatus, via electromagnetic carrier signal and/or may be copied from a physical entity such as computer program product. Execution of the computer readable instructions causes the apparatus 500 to perform functionality described above.

In the context of this document, a "memory" or "computer-readable media" may be any non-transitory media or means that can contain, store, communicate, propagate or transport the instructions for use by or in connection with an instruction execution system, apparatus, or device, such as a computer.

The apparatus 500 further comprises, or is connected to, an input unit 530. The input unit 530 comprises one or more interfaces for receiving a user input. The one or more interfaces may comprise for example one or more motion and/or orientation sensors, one or more cameras, one or more accelerometers, one or more microphones, one or more buttons and one or more touch detection units. Further, the input unit 530 may comprise an interface to which external devices may connect to.

The apparatus 500 also comprises an output unit 540. The output unit comprises or is connected to one or more displays capable of rendering visual content such as a light emitting diode, LED, display, a liquid crystal display, LCD and a liquid crystal on silicon, LCoS, display. The output unit 540 further comprises one or more audio outputs. The one or more audio outputs may be for example loudspeakers or a set of headphones.

The apparatus 500 may further comprise a connectivity unit 550. The connectivity unit 550 enables wired and/or wireless connectivity to external networks. The connectivity unit 550 may comprise one or more antennas and one or more receivers that may be integrated to the apparatus 500 or the apparatus 500 may be connected to. The connectivity unit 550 may comprise an integrated circuit or a set of integrated circuits that provide the wireless communication capability for the apparatus 500. Alternatively, the wireless connectivity may be a hardwired application specific integrated circuit, ASIC.

It is to be noted that the apparatus 500 may further comprise various component not illustrated in the FIG. 5. The various components may be hardware component and/or software components.

Even though the invention has been described above with reference to example embodiments according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. An apparatus comprising means for:
rendering a call, for a user, wherein the call comprises a first sector and a second sector, wherein the first sector comprises a first participant in the call and at least one spatial audio source associated with the first participant, and the second sector comprises a second participant and at least one spatial audio source associated with the second participant;
detecting an activity of the user; and
as a response to the activity of the user, providing an audible change in the rendering of the call by modifying at least one of the first and the second sector.

2. An apparatus according to claim 1 wherein the apparatus further comprises means for modifying the first sector by narrowing it and modifying the second sector by expanding it.

3. An apparatus according to claim 1 or 2 wherein modifying the first sector comprises modifying the at least one spatial audio source associated with the first participant and modifying the second sector comprises modifying the at least one sound source associated with the second participant.

4. An apparatus according to claim 3, wherein modifying the at least one spatial audio source associated with the first participant comprises moving the location from which it is rendered to originate from.

5. An apparatus according to claim 4, wherein moving the location of the at least one spatial audio source associated with the first participant corresponds to a movement of a head of the user.

6. An apparatus according to claim 3, 4 or 5, wherein modifying the at least one spatial audio source associated with the second participant comprises one or more of the following: moving the location from which is the rendered to originate from, modifying it to be a mono audio source, or modifying its volume level.

7. An apparatus according to any previous claim, wherein the activity of the user comprises the user providing input for selecting the first participant as a participant for interacting with.

8. An apparatus according to any previous claim, wherein the activity of the user comprises movement of the user.

9. An apparatus according to claim 8, wherein the movement of the user is movement of the head of the user.

10. An apparatus according to any previous claim, wherein a field of view of the user corresponds to the first sector.

11. An apparatus according to any previous claim, wherein the call further comprises a third sector that comprises a third participant in the call and at least one spatial audio source associated with the third user.

12. A method comprising:
rendering a call, for a user, wherein the call comprises a first sector and a second sector, wherein the first sector comprises a first participant in the call and at least one spatial audio source associated with the first participant, and the second sector comprises a second participant and at least one spatial audio source associated with the second participant;
detecting an activity of the user; and
as a response to the activity of the user, providing an audible change in the rendering of the call by modifying at least one of the first and the second sector.

13. A method according to claim 12, wherein the method further comprises modifying the first sector by narrowing it and modifying the second sector by expanding it.

14. A method according to claim 13, wherein the activity of the user comprises movement of the user.

15. A computer program comprising instructions which, when executed by an apparatus, cause the apparatus to perform at least the following:
render a call, for a user, wherein the call comprises a first sector and a second sector, wherein the first sector comprises a first participant in the call and at least one spatial audio source associated with the first participant, and the second sector comprises a second participant and at least one spatial audio source associated with the second participant;
detect an activity of the user; and
as a response to the activity of the user, provide an audible change in the rendering of the call by modifying at least one of the first and the second sector.
